# EUROPÄISCHE PATENTSCHRIFT

(11) **EP 0 952 033 B1**
(45) Veröffentlichungstag und Bekanntmachung des Hinweises auf die Patenterteilung: **25.06.2003**
(21) Anmeldenummer: 99106675.4
(22) Anmeldetag: 01.04.1999
(51) Int. Cl.: B60N 2/42

(54) **Fahrzeugsitz mit einer Kopfstütze**
Vehicle seat with a head rest
Siège de véhicule avec un appuie-tête

(30) Priorität: 22.04.1998 DE 19817980
(43) Veröffentlichungstag der Anmeldung: 27.10.1999
(73) Patentinhaber: GRAMMER AG, 92224 Amberg (DE)
(72) Erfinder: Meyer, Thomas, 92224 Amberg (DE); Haller, Erwin, 92262 Birgland (DE); Eidenhammer, Peter, 85417 Marzling (DE); Hermann, Steffan, 4020 Linz (AT)
(74) Vertreter: LOUIS- PÖHLAU- LOHRENTZ

(56) Entgegenhaltungen:
- DE-A- 19 738 201
- DE-U- 29 601 798
- DE-U- 29 723 240
- GB-A- 2 301 906

## Beschreibung

Die Erfindung betrifft einen Fahrzeugsitz gemäß dem Oberbegriff des Anspruchs 1.

Derartige Fahrzeugsitze sind in einer Vielzahl Ausbildungen bekannt.

Ein Fahrzeugsitz der eingangs genannten Art ist aus der DE-U-296 01 798 bekannt.

Nachdem der Kopf des jeweiligen Sitzbenutzers von der Kopfstütze des Fahrzeugsitzes üblicherweise beabstandet ist, ergibt sich insbes. bei Auffahrgeschwindigkeiten bis ca. 15 km/h die Gefahr eines sog. Halswirbel-Schleudertraumas infolge Scherebeanspruchung der einzelnen Halswirbel. Um ein solches Halswirbel-Schleudertrauma zu vermeiden, wurde in der genannten DE-U-296 01 798 bereits vorgeschlagen, in die Kopfstütze des Fahrzeugsitzes ein Airbag-artiges Gebilde zu integrieren, um bei einer Auffahr-Situation im Heckbereich des jeweiligen Fahrzeuges eine Vorverlagerung der Kopfstütze zu erzielen. Eine solche Integration in die Kopfstütze weist jedoch den Mangel auf, daß die Kopfstütze gleichsam nicht mehr autark und somit nicht problemlos von der Rückenlehne des Fahrzeugsitzes entfernbar ist, bzw. daß die Form der Kopfstütze durch die Integration des Airbag entsprechend beeinflußt bzw. beeinträchtigt wird.

Aus der älteren DE-A-197 38 201 A1 ist ein Fahrzeugsitz mit einer Kopfstütze bekannt, wobei eine Einrichtung vorgesehen ist, mit der im Falle einer starken Verzögerung bzw. Beschleunigung in Fahrtrichtung, bspw. bei einem Auffahrunfall, die Kopfstütze automatisch nach vorne geneigt und in dieser Stellung arretiert wird. Dabei kann die Kopfstütze mit mindestens einer Stützstange fest verbunden sein, deren Führung ein unteres Stützstangen-Führungselement aufweist, das mit der Stützstange höhenmäßig verriegelt und am Rückenlehnenträger um eine horizontale und zum Rückenlehnenträger parallele Achse verschwenkbar angeordnet ist. Ein oberes Stützstangen-Führungselement kann dort im Abstand zum unteren Stützstangen-Führungselement vorgesehen sein, das die Stützstange höhenmäßig verschiebbar führt und am Rückenlehnenträger um eine horizontale und zum Rückenlehnenträger parallele Achse verschwenkbar angeordnet ist, wobei das obere Stützstangen-Führungselement mit dem Rückenlehnenträger über einen verschwenkbaren Arm verbunden ist, der am Rückenlehnenträger und am oberen Stützstangen-Führungselement angelenkt ist und bei seiner Verschwenkung den Abstand zwischen dem oberen Stützstangen-Führungselement und dem Rückenlehnenträger ändert. Zur Verschwenkung des Arms zwecks Vergrößerung des Abstandes zwischen dem oberen Stützstangen-Führungselement und dem Rückenlehnen ist dort eine auf eine Fahrverzögerung bzw. -beschleunigung ansprechende Einrichtung vorgesehen. Bei dieser Einrichtung kann es sich um eine Blattfeder handeln, die im Bereich des Gesäßes der auf dem Fahrzeugsitz Platz nehmenden Person in der Rückenlehne des Fahrzeugsitzes vorgesehen ist.

Der Erfindung liegt in Kenntnis dieser Gegebenheiten die Aufgabe zugrunde, einen Fahrzeugsitz der eingangs genannten Art nach der DE-U-296 01798 zu schaffen, bei welchem die Kopfstütze bei einer Auffahr-Situation im Heckbereich des entsprechenden Fahrzeugs mit einfachen Mitteln derartig vorverlagert wird, daß ein Halswirbel-Schleudertrauma des Benutzers des Fahrzeugsitzes zuverlässig verhindert wird, wobei die Kopfstütze autark und somit von der Rückenlehne im Bedarfsfall entfernbar ist.

Diese Aufgabe wird bei einem Fahrzeugsitz der eingangs genannten Art erfindungsgemäß durch die Merkmale des Patentanspruches 1 gelöst. Bevorzugte Aus-bzw. Weiterbildungen des erfindungsgemäßen Fahrzeugsitzes sind in den Unteransprüchen gekennzeichnet.

Dadurch, daß die Verstelleinrichtung mit der Kulisse und das pyrotechnische Antriebselement zum linearen Verstellen der Kulisse an der Rückenlehne vorgesehen sind, ergibt sich der Vorteil, daß die Kopfstütze autark ist und folglich im Bedarfsfall auch von der Rückenlehne des Fahrzeugsitzes entfernt werden kann. Das kann bspw. bei der Montage des Fahrzeugsitzes im zugehörigen Fahrzeug erforderlich sein. Die Kopfstütze des erfindungsgemäßen Fahrzeugsitzes kann manuell oder motorisch in bezug auf die Rückenlehne höhenverstellbar sein. Bei dem pyrotechnischen Antriebselement zum Verstellen der Verstelleinrichtung in Querrichtung des Fahrzeugsitzes und somit zur Verstellung der Kopfstütze in Sitzlängsrichtung nach vorne kann es sich um ein an sich bekanntes pyrotechnisches Antriebselement handeln, wie es bspw. bei Gurtstraffern für Fahrzeugsitze zur Anwendung gelangt. Bei der fahrzeugeigenen Beschleunigungs-Sensoreinrichtung handelt es sich bspw. um einen sog. Crash-Sensor, wie er bekanntermaßen bei den zuletzt erwähnten Gurtstraffern bzw. bei Airbags in Fahrzeugen zum Einsatz gelangt.

Bei dem erfindungsgemäßen Fahrzeugsitz kann die Verstelleinrichtung ein Plattenelement aufweisen, das am oberseitigen Endabschnitt der Rückenlehne in deren Querrichtung linear beweglich vorgesehen ist.

Die Verbindungseinrichtung kann zwei voneinander beabstandete Stangenelemente aufweisen und das Plattenelement der Verstelleinrichtung kann mit zwei voneinander getrennten, die Kulisse bildenden Kulissenschlitzen ausgebildet sein, durch welche sich die beiden Stangenelemente hindurcherstrecken. Durch geeignete Gestaltung der beiden Kulissenschlitze ist eine einfache Auslegung der Kinematik, d.h. des Verlagerungsweges der Kopfstütze nach vorne sowie der Geschwindigkeit bzw. der Beschleunigung der Verlagerungsbewegung, d.h. ihrer "Aggressivität" problemlos möglich.

Die Kulissenschlitze können einen aktiven Verstellendabschnitt mit einer zum Festlegen der vorverlagerten Stangenelemente mit der Kopfstütze vorgesehenen Rastung aufweisen. Durch eine solche Ausbildung ergibt sich der Vorteil, daß die vorverlagerte Kopfstütze in der vorverlagerten Position fixiert wird, was unter Sicherheits-Gesichtspunkten bevorzugt ist.

Um ungewollte, begrenzte Bewegungen der Verstelleinrichtung in ihrer inaktiven, d.h. nicht durch das pyrotechnische Antriebselement ausgelösten aktiven Position zu verhindern, kann das Plattenelement mittels eines Halteelementes in seiner normalen Inaktiv-Position festgehalten werden. Dieses Halteelement kann bspw. von einem Scher-Zapfen gebildet sein, der sich in ein Loch im Plattenelement hineinerstreckt. Wird das Plattenelement mit Hilfe des pyrotechnischen Antriebselementes beschleunigt, um die Kopfstütze in Sitzlängsrichtung nach vorne zu verlagern, so wird das vom Scher-Zapfen gebildete Halteelement abgeschert und das Plattenelement wie beschrieben linear bewegt. Um das Abscheren des Scher-Zapfens zu erleichtern bzw. ein definiertes Abscher-Verhalten zu erzielen, kann der Scher-Zapfen bspw. mit einer Soll-Schwachstelle ausgebildet sein. Demselben Zwecke kann es dienlich sein, wenn das Loch im Plattenelement mit einer Scher-Kante ausgebildet ist.

Bei dem erfindungsgemäßen Fahrzeugsitz hat es sich als zweckmäßig erwiesen, wenn das pyrotechnische Antriebselement zur Aktivierung innerhalb eines Zeitabschnittes von ca. 50 bis 60 msec bei einer Auffahrgeschwindigkeit des Fahrzeuges bis ca. 15 km/h vorgesehen ist. Aus Unfallanalysen, Schlittenversuchen mit sog. Dummy's bzw. aus realen Kollisionen ist es bekannt, daß eine Kopfstütze innerhalb des zuletzt genannten Zeitabschnittes von ca. 50 bis 60 msec bei einer Auffahrgeschwindigkeit von bis zu ca. 15 km/h aktiviert werden muß, um optimal wirksam zu sein. Diese geringe Zeitspanne macht den Einsatz eines pyrotechnischen Antriebselementes notwendig. Bei der Aktivierung des pyrotechnischen Antriebselementes wird die Verstelleinrichtung linear in Sitzquerrichtung verstellt. Dabei wird mit Hilfe der Kulisse die Kopfstütze in Sitzlängsrichtung nach vorne bewegt. In ihrer vorderen Endposition ist die Kopfstütze dann durch die Rastung der Kulisse fixiert.

Der erfindungsgemäße Fahrzeugsitz weist den erheblichen Vorteil auf, daß die übliche Problematik der sog. "Out-Of-Position", wie sie z.B. durch eine Anlage eines Kopfes an der Kopfstütze gegeben ist, durch die relativ kleinen Verschiebe-Geschwindigkeiten und durch eine geeignete "Sloop-Kurve" des pyrotechnischen Antriebselementes eliminiert ist. Bei der Anlage des Kopfes des Sitzbenutzers an der Kopfstütze während der normalen Fahrt würde sich nämlich eine entsprechende Vergrößerung der Masseträgheiten um ca. das Dreifache ergeben, so daß die Generatorleistung des pyrotechnischen Antriebselementes nicht mehr ausreichen würde, um diese erhöhten Massen, d.h. die Summe aus der Masse der Kopfstütze und der Masse des Kopfes des Sitzbenutzers, verletzungstypisch zu beschleunigen.

Bei dem erfindungsgemäßen Fahrzeugsitz ist die Anzahl der Bauteile bzw. Komponenten auf ein Minimum reduziert, sie bewegen sich entlang einfacher Bewegungsbahnen. Der Verlauf der Kulisse der Verstelleinrichtung des erfindungsgemäßen Fahrzeugsitzes ist auf die verschiedenen möglichen Anforderungen wie bspw. den Verlagerungsweg der Kopfstütze nach vorne in die "Aggressivität" der Verlagerung in einfacher Weise auslegbar, wie bereits erwähnt worden ist. Weitere bereits erwähnte Vorteile bestehen darin, daß das pyrotechnische Antriebselement in der Rückenlehne vorgesehen ist, so daß bei einer Fehlauslösung oder bei einer Beschädigung des pyrotechnischen Antriebselementes für den Sitzbenutzer keine direkte Gefahr besteht. Das pyrotechnische Antriebselement bildet ein geschlossenes System, was bedeutet, daß keine die Gesundheit schädigende Gase entweichen können. Außerdem werden im Fahrzeuginneren keine Druckspitzen erzeugt, welche Knall-Geräusche erzeugen würden, die zu Gehörschäden o.dgl. führen können. Wie ebenfalls bereits erwähnt worden ist, ist bei dem erfindungsgemäßen Fahrzeugsitz die Kopfstütze autark und folglich im Bedarfsfall auch von der Rückenlehne des Fahrzeugsitzes entfernbar. Einschränkende Vorgaben an die Form bzw. Gestalt der Kopfstütze gibt es erfindungsgemäß nicht. Die Kopfstütze des erfindungsgemäßen Fahrzeugsitzes kann auch wunschgemäß in der Höhe verstellbar sein. Bei dieser Höheneinstellung kann es sich auch um eine automatische Höheneinstellung handeln, welche einen wichtigen Sicherheits-Zugewinn bildet.

Ein Ausführungsbeispiel des erfindungsgemäßen Fahrzeugsitzes bzw. wesentlicher Teile desselben sind in der Zeichnung schematisch dargestellt und werden nachfolgend beschrieben. Es zeigen:
- Fig. 1: teilweise aufgeschnitten einen Fahrzeugsitz in einer Seitenansicht,
- Fig. 2: einen Schnitt entlang der Schnittlinie II-II in Fig. 1 in einem größeren Maßstab, und
- Fig. 3: einen Schnitt entlang der Schnittlinie III-III in Fig. 2 in einem weiter vergrößerten Maßstab.

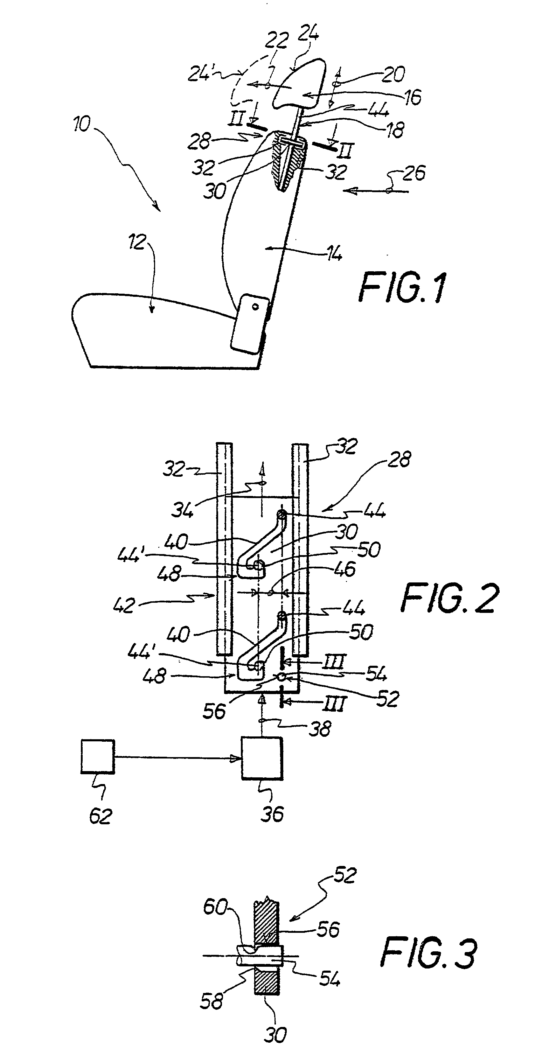

Fig. 1 zeigt einen Fahrzeugsitz 10 mit einem Sitzteil 12, von welchem eine Rückenlehne 14 nach oben steht, die teilweise aufgeschnitten gezeichnet ist. An der Rückenlehne 14 ist eine Kopfstütze 16 vorgesehen, die mittels einer Verbindungseinrichtung 18 an der Rückenlehne angebracht ist. Die Kopfstütze 16 ist an der Rückenlehne 14 vorzugsweise höhenverstellbar angebracht. Diese Höhenverstellbarkeit ist durch den Doppelpfeil 20 angedeutet. Die Kopfstütze 16 ist außerdem in Sitzlängsrichtung nach vorne verstellbar. Das ist durch den bogenförmigen Pfeil 22 angedeutet. Die Kopfstütze 16 bzw. deren Vorderkontur 24 ist mit einer dünnen strichlierten Linie 24' in ihrer nach vorne verlagerten Position verdeutlicht. Diese Verlagerung der Kopfstütze 16 nach vorne erfolgt, wenn eine durch den Pfeil 26 angedeutete Fahrzeug-Auffahr-Situation gegeben ist.

Wie auch aus Fig. 2 ersichtlich ist, ist an der Rückenlehne 14 eine Verstelleinrichtung 28 vorgesehen, die ein Plattenelement 30 aufweist. Das Plattenelement 30 ist an einer Führungseinrichtung 32 in Querrichtung des Fahrzeugsitzes linear verstellbar vorgesehen. Das ist in Fig. 2 durch den Pfeil 34 angedeutet. Zur linearen Verstellung des Plattenelementes 30 der Verstelleinrichtung 28 ist ein pyrotechnisches Antriebselement 36 vorgesehen, das in Fig. 2 durch einen Block schematisch angedeutet ist. Die Wirkverbindung des pyrotechnischen Antriebselementes 36 mit dem Plattenelement 30 der Verstelleinrichtung 28 ist in Fig. 2 durch die Pfeillinie 38 verdeutlicht.

Das Plattenelement 30 der Verstelleinrichtung 28 ist mit zwei konformen Kulissenschlitzen 40 ausgebildet, die eine Kulisse 42 der Verstelleinrichtung 28 bilden. Die Verbindungseinrichtung 18 zur Verbindung der Kopfstütze 16 mit der Rückenlehne 14 weist zwei voneinander beabstandete Stangenelemente 44 auf, die sich durch die Kulissenschlitze 40 im Plattenelement 30 der Verstelleinrichtung 28 hindurcherstrecken. In Fig. 2 sind die beiden Stangenelemente 44 der Verbindungseinrichtung 18 (sh. Fig.1) mit durchgezogenen Linien schraffiert in ihrer normalen Inaktiv-Position und mit dünnen strichlierten Linien als Stangenelemente 44' - nach einer entsprechenden Aktivierung des pyrotechnischen Antriebselementes 36 - in ihrer aktiven, d.h. vorverlagerten Kopfstützen-Position zeichnerisch dargestellt, wie sie in Fig. 1 durch die vorverlagerte Vorderkontur 24' der Kopfstütze 16 verdeutlicht ist. Entsprechend der Gestalt bzw. des Kurvenverlaufes der Kulissenschlitze 40 ergibt sich ein bestimmter Vorverlagerungsweg der Kopfstütze 16, der in Fig. 2 durch den Doppelpfeil 46 verdeutlicht ist. Der Kurvenverlauf der Kulissenschlitze 40 ergibt auch die gewünschte "Aggresivität" der Kopfstützenvorverlagerung in Sitzlängsrichtung, wie sie in Fig. 1 durch den bogenförmigen Pfeil 22 angedeutet ist.

Um die Kopfstütze 16 in der vorverlagerten Position entsprechend der Vorderkontur 24' gemäß Fig.1 zu fixieren, sind die Kulissenschlitze 40 an ihrem aktiven Verstellendabschnitt 48 mit einer Rastung 50 ausgebildet.

Um das Plattenelement 30 der Verstelleinrichtung 28 in seiner normalen Inaktiv-Position festzuhalten, d.h. Rüttelbewegungen o.dgl. des Plattenelementes 30 zu verhindern, kann ein Halteelement 52 vorgesehen sein. Dieses Halteelement 52 kann von einem in Fig. 3 abschnittweise gezeichneten Scher-Zapfen 54 gebildet sein, der sich in ein Loch 56 im Plattenelement 30 der Verstelleinrichtung 28 hineinerstreckt. Das Loch 56 im Plattenelement 30 kann mit einer Scher-Kante 58 und der Scher-Zapfen 54 kann mit einer definierten Schwachstelle 60 ausgebildet sein, um bei einer Aktivierung des pyrotechnischen Antriebselementes 36 das Abscheren des Scher-Zapfens 54 zu erleichtern. Die Aktivierung des pyrotechnischen Antriebselementes (sh. Fig. 2) erfolgt mit Hilfe einer fahrzeugeigenen Beschleunigungs-Sensoreinrichtung 62, die in Fig. 2 - wie das pyrotechnische Antriebselement 36 - durch einen Block schematisch verdeutlicht ist.

## Patentansprüche

1. Fahrzeugsitz mit einer Rückenlehne (14) und einer Kopfstütze (16), die mittels einer Verbindungseinrichtung (18) an der Rückenlehne (14) angebracht ist, wobei an der Rückenlehne (14) ein pyrotechnisches Antriebselement (36) vorgesehen ist, das zu seiner Aktivierung mit einer fahrzeugeigenen Beschleunigungs-Sensoreinrichtung (62) zusammengeschaltet ist,
**dadurch gekennzeichnet,**
**daß** an der Rückenlehne (14) eine Verstelleinrichtung (28) linear beweglich vorgesehen ist, die eine Kulisse (42) aufweist, an welcher die Verbindungseinrichtung (18) der Kopfstütze (16) derartig geführt ist, daß eine Verstellung der
Verstelleinrichtung (28) in Querrichtung des Fahrzeugsitzes (10) eine Verstellung der Kopfstütze (16) in Sitzlängsrichtung nach vorne ergibt, und daß die Verstelleinrichtung (28) zu ihrer Verstellung mit dem pyrotechnischen Antriebselement (36) verbunden ist.

2. Fahrzeugsitz nach Anspruch 1,
**dadurch gekennzeichnet,**
**daß** die Verstelleinrichtung (28) ein Plattenelement (30) aufweist, das am oberseitigen Endabschnitt der Rückenlehne (14) in deren Querrichtung linear beweglich vorgesehen ist.

3. Fahrzeugsitz nach Anspruch 1 und 2,
**dadurch gekennzeichnet,**
**daß** die Verbindungseinrichtung (18) zwei voneinander beabstandete Stangenelemente (44) aufweist, und daß das Plattenelement (30) der Verstelleinrichtung (28) mit zwei voneinander getrennten, die Kulisse (42) bildenden Kulissenschlitzen (40) ausgebildet ist, durch welche sich die beiden Stangenelemente (44) hindurcherstrecken.

4. Fahrzeugsitz nach Anspruch 3,
**dadurch gekennzeichnet,**
**daß** die Kulissenschlitze (40) einen aktiven Verstellendabschnitt (48) mit einer zum Festlegen der vorverlagerten Stangenelemente (44) mit der Kopfstütze (16) vorgesehenen Rastung (50) aufweisen.

5. Fahrzeugsitz nach Anspruch 2,
**dadurch gekennzeichnet,**
**daß** das Plattenelement (30) mittels eines Halteelementes (52) in seiner normalen Inaktiv-Position festgehalten wird.

6. Fahrzeugsitz nach Anspruch 5,
**dadurch gekennzeichnet,**
**daß** das Halteelement (52) von einem Scher-Zapfen (54) gebildet ist, der sich in ein Loch (56) im Plattenelement (30) hineinerstreckt.

7. Fahrzeugsitz nach Anspruch 1,
**dadurch gekennzeichnet,**
**daß** das pyrotechnische Antriebselement (36) zur Aktivierung innerhalb eines Zeitabschnittes von ca. 50 bis 60 msec bei einer Auffahrgeschwindigkeit des Fahrzeuges bis ca. 15 km/h vorgesehen ist.

## Claims

1. Vehicle seat having a backrest (14) and a head restraint (16) which is attached to the backrest (14) by means of a connecting device (18), with a pyrotechnic driving element (36) being provided on the backrest (14), the said driving element being connected, in order for it to be activated, to an acceleration sensor device (62) belonging to the vehicle, **characterized in that** an adjusting device (28) is provided in a linearly moveable manner on the backrest (14), the said adjusting device having a slotted guide (42) on which the connecting device (18) of the head restraint (16) is guided in such a manner that an adjustment of the adjusting device (28) in the transverse direction of the vehicle seat (10) results in the head restraint (16) being adjusted forwards in the longitudinal direction of the seat, and **in that** the adjusting device (28) is connected, in order for it to be adjusted, to the pyrotechnic driving element (36).

2. Vehicle seat according to Claim 1, **characterized in that** the adjusting device (28) has a plate element (30) which is provided on the upper end section of the backrest (14) in a manner such that it can be moved linearly in the transverse direction of the said backrest.

3. Vehicle seat according to Claims 1 and 2, **characterized in that** the connecting device (18) has two spaced-apart rod elements (44), and **in that** the plate element (30) of the adjusting device (28) is formed with two slotted-guide slots (40) which are separate from each other, form the slotted guide (42) and through which the two rod elements (44) extend.

4. Vehicle seat according to Claim 3, **characterized in that** the slotted-guide slots (40) have an active adjusting end section (48) with a latching means (50) which is provided for fixing the forwardly displaced rod elements (44) to the head restraint (16).

5. Vehicle seat according to Claim 2, **characterized in that** the plate element (30) is secured in its normal inactive position by means of a retaining element (52).

6. Vehicle seat according to Claim 5, **characterized in that** the retaining element (52) is formed by a shearing pin (54) which extends into a hole (56) in the plate element (30).

7. Vehicle seat according to Claim 1, **characterized in that** the pyrotechnic driving element (36) is provided for activation within a period of time of approximately 50 to 60 msec at a collision speed of the vehicle of up to approximately 15 km/h.

## Revendications

1. Siège pour véhicule, du type comportant un dossier (14) et un appuie-tête (16) qui est associé au dossier (14) au moyen d'un système de liaison (18), sur le dossier (14) étant prévu un élément de commande pyrotechnique (36), qui est connecté en vue de son activation avec un système à palpeur d'accélération (62) propre au véhicule,
**caractérisé en ce que**
sur le dossier (14) est prévu un système de réglage mobile linéairement (28), qui comporte un coulisseau (42) sur lequel le système de liaison (18) de l'appuie-tête (16) est guidé d'une manière telle qu'un réglage du système de réglage du système (28) transversalement par rapport au siège du véhicule (10) détermine un réglage vers l'avant de l'appuie-tête (10) longitudinalement par rapport au siège,
et **en ce que** le système de réglage (28) est relié pour son réglage avec l'élément de commande pyrotechnique (36).

2. Siège pour véhicule selon la revendication 1, **caractérisé en ce que** le système de réglage (28) comporte un élément (30) en forme de plaque qui, sur la section terminale du côté supérieur du dossier (14), est prévu mobile linéairement en direction transversale.

3. Siège pour véhicule selon les revendications 1 et 2, **caractérisé en ce que** le système de liaison (18) comporte deux éléments en forme de tiges (44) écartés l'un de l'autre, et **en ce que** l'élément en forme de plaque (30) du système de réglage (28) est constitué de deux fentes coulissantes (40) séparées l'une de l'autre qui ferment le coulisseau (42), et à travers lesquelles traversent les deux éléments en forme de tiges (44).

4. Siège pour véhicule selon la revendication 3, **caractérisé en ce que** les fentes coulissantes (40) présentent une section de réglage actif (48) avec un arrêt (50) prévu sur l'appuie-tête (16) en vue de l'immobilisation des éléments en forme de sièges (44) déplacés à l'avance.

5. Siège pour véhicule selon la revendication 2, **caractérisé en ce que** l'élément en forme de plaque (30) est maintenu dans sa position normale inactive au moyen d'un élément formant butée (52).

6. Siège pour véhicule selon la revendication 5, **caractérisé en ce que** l'élément formant butée (52) consiste en une cheville de cisaillement (54) qui s'enfonce dans un trou (56) de l'élément en forme de plaque (30).

7. Siège pour véhicule selon la revendication 1, **caractérisé en ce que** le système de commande porytechnique (36) est prévu pour être activé dans un intervalle de temps d'environ 50 à 60 msec pour une vitesse d'arrivée du véhicule allant jusqu'à environ 15 km/h.
